# EUROPÄISCHE PATENTSCHRIFT

(11) **EP 0 551 605 B1**
(45) Veröffentlichungstag und Bekanntmachung des Hinweises auf die Patenterteilung: **22.01.1997**
(21) Anmeldenummer: 92120626.4
(22) Anmeldetag: 03.12.1992
(51) Int. Cl.: B60G 17/08, F16F 9/46

(54) **Regelbarer Schwingungsdämpfer für Kraftfahrzeuge**
Controllable shock absorber for motor cars
Amortisseur réglable pour véhicules automobiles

(30) Priorität: 22.05.1992 DE 4216987; 17.01.1992 DE 4201200
(43) Veröffentlichungstag der Anmeldung: 21.07.1993
(73) Patentinhaber: August Bilstein GmbH, 58256 Ennepetal (DE); MERCEDES-BENZ AG, 70327 Stuttgart (DE)
(72) Erfinder: Scheerer, Hans, Dipl.-Ing., D-73734 Esslingen (DE); Opara, Andreas, Dipl.-Ing., D-70736 Fellbach 4 (DE); Schulz, Walter, Dipl.-Ing., D-70378 Stuttgart 50 (DE); Huang, Zhen, Dr.-Ing., D-42389 Wuppertal (DE); Betsch, Hans-Joachim, Dipl.-Ing., D-59174 Kamen (DE)

(56) Entgegenhaltungen:
- DE-A- 4 007 180
- DE-U- 8 437 034
- FR-A- 2 626 820
- FR-A- 2 636 697
- FR-A- 2 649 465
- GB-A- 2 196 092

## Beschreibung

Die Erfindung betrifft einen regelbaren Schwingungsdämpfer für Kraftfahrzeuge, bestehend aus einem mit Dämpfungsflüssigkeit gefüllten Dämpferzylinder, in dem ein mit einer Kolbenstange verbundener, mit druckabhängigen Ventilen versehener Dämpfungskolben gleitet, der den Dämpferzylinder in zwei Arbeitsräume unterteilt, und der mit einem regelbaren Dämpfungsventilsystem zur Einstellung der Dämpfungskraft des Schwingungsdämpfers versehen ist.

Das gattungsbildende Dokument FR 2 626 820 A1 zeigt einen regelbaren Schwingungsdämpfer, bei dem parallel zum Arbeitszylinder eine regelbare Bypass-Strecke vorgesehen ist, die mit federbelasteten Ventilen und Steuerschiebern versehen ist, wodurch die Einstellung einer harten Kennlinie in der Druckstufe und einer weichen Kennlinie in der Zugstufe erreicht werden soll. Die hier gezeigte Konstruktion mit mindestens zwei druckabhängigen Dämpfungsventilen, die ständig in beiden Richtungen durchströmt werden können, weist jedoch als Nachteil auf, daß lediglich zwei Kennlinien, nämlich eine für die Zugstufe und eine für die Druckstufe erzeugt werden können.

Die GB 21 96 092 A offenbart ein Drossel-Rückschlagventilsystem in der Zufuhrleitung vom Druckspeicher zum Schwingungsdämpfer innerhalb eines hydropneumatischen Aufhängungssystems für Kraftfahrzeuge. Hierdurch werden im wesentlichen Unterdruckerscheinungen im Ausgleichsgefäß und im Kolben (Blasenbildung) vermieden, wenn die Ausfahrgeschwindigkeit des Kolbens in der Zugstufe zu hoch wird. Abgesehen von der speziellen Ausbildung dieser Einrichtung für ein hydropneumatisches System besteht ein weitere Nachteil darin, daß die gesamte Funktion des Drossel-Rückschlagventilsystems auf den Einbau in der Zufuhrleitung vom Druckspeicher zum Schwingungsdämpfer vorgesehen ist, nicht aber etwa als Bypass-System zur Verbindung zweier Arbeitsräume eines Dämpfungszylinders und zur dadurch möglichen Beeinflussung von Kennlinien nutzbar wird.

Aus der deutschen Offenlegungsschrift DE 34 34 877 ist ebenfalls ein regelbarer Schwingungsdämpfer bekannt, bei dem das parallel zum Arbeitszylinder angeordnete Bypassventil aus einem mit einem Durchlaß zusammenarbeitenden, axial beweglichen steuerbaren Ventilkörper und mindestens einem mit dem Ventilkörper in Reihe angeordneten druckabhängigen, federbelasteten Ventil besteht. Ein wesentlicher Nachteil dieses Schwingungsdämpfers liegt jedoch darin, daß mit Hilfe des Bypassventils nur zwei Dämpfungskraftkennlinien in der Zug- und Druckstufe erreicht werden können.

Eine vierstufige Verstellung der Dämpfungskraft eines Zweirohrschwingungsdämpfers ist aus der deutschen Patentschrift DE 36 31 714 C2 bekannt.

Neben einem zwischen dem unteren und dem oberen Arbeitsraum angeordneten, regelbaren Bypassventil, mit dem zwei Dämpfungskraftkennlinien in der Zug- und der Druckstufe eingestellt werden können, ist ein weiteres Bypassventil zwischen dem unteren Arbeitsraum und dem Ausgleichsraum vorgesehen, um eine Dämpfungskraftverstellung in vier verschiedenen Variationen zu ermöglichen. Dieser Schwingungsdämpfer weist den Nachteil auf, daß neben einer sehr großen Totlänge, insbesondere wenn beide Ventile im Dämpfer angeordnet sind, auch der konstruktive Aufwand und der Aufwand an Bauelementen sehr hoch ist.

Die Aufgabe der Erfindung ist es, eine Einstellung der Dämpfungskraft in der Zug- und Druckstufe mit jeweils vier Kennlinien mit Hilfe eines Dämpfungsventils sowohl beim Einrohr- als auch beim Zweirohrschwingungsdämpfer zu erreichen, wobei das Dämpfungsventil in verschiedenen Variationen im Schwingungsdämpfersystem eingebaut werden kann.

Die Aufgabe der Erfindung wird durch die kennzeichnenden Merkmale des ersten Anspruchs gelöst, wobei die Unteransprüche vorteilhafte Ausführungen darstellen.

Erfindungsgemäß besteht das regelbare Dämpfungsventilsystem des Schwingungsdämpfers aus zwei in einem zylinderförmigen Ventilgehäuse axial hintereinander angeordneten Dämpfungsventilen, wobei jedes der Dämpfungsventile aus einem elektromagnetische ansteuerbaren, mit mindestens einem Durchlaß zusammenarbeitenden, axial beweglichen Steuerschieber und mindestens einem mit dem Steuerschieber strömungstechnisch parallel oder in Reihe geschalteten druckabhängigen Ventil besteht.

In einer Ausführungsform der Erfindung steuert das Dämpfungsventilsystem den Querschnitt eines Bypasskanals, der die Arbeitsräume des Schwingungsdämpfers miteinander verbindet.

Bei der Verwendung des Dämpfungsventilsystems für einen Zweirohrdämpfer steuert das Dämpfungsventilsystem den Querschnitt eines Bypasskanals, der einen der Arbeitsräume des Dämpferzylinders mit dem Ausgleichsraum verbindet, wobei der Bypass zwischen oberem Arbeitsraum und dem Ausgleichsraum oder zwischen dem unteren Arbeitsraum und dem Ausgleichsraum angeordnet sein kann.

Wird das Dämpfungsventilsystem für eine Niveauregelung mit einem externen Speicher eines Schwingungsdämpfers eingesetzt, verbindet das Dämpfungsventilsystem zur Einstellung der Dämpfungskraft einen der Arbeitsräume des Dämpferzylinders mit dem externen Speicher für die unter erhöhtem Druck stehende Dämpfungsflüssigkeit.

Eine einfache Ausführungsform der Erfindung besteht darin, daß der Bypasskanal durch ein um das Ventilgehäuse angeordnetes Rohr gebildet wird und der Bypasskanal Verbindungen zu den von den Steuerschiebern verstellbaren Durchlässen des Dämpfungsventilsystems aufweist.

In einer Ausgestaltung der Erfindung weist der Bypasskanal zwischen den druckabhängigen Ventilen mindestens einen Durchlaß zum Ventilinnenraum auf.

In einer anderen Ausführungsform der Erfindung ist der durch das Dämpfungsventilsystem steuerbare Bypasskanal durch ein den Dämpferzylinder oder beim Zweirohrschwingungsdämpfer den Außenzylinder umgebendes Rohr gebildet.

Eine einfache und kostengünstige Ausgestaltung der Erfindung besteht darin, den steuerbaren Bypasskanal durch ein im Ventilgehäuse zwischen den von den Steuerschiebern verstellbaren Durchlässen angeordnetes Rohr zu bilden, das zwischen den druckabhängigen Ventilen mindestens einen Durchlaß zum Ventilraum aufweist.

Die Ansteuerung der axial beweglichen Steuerschieber wird jeweils über einen Elektromagneten realisiert, wobei in einer vorteilhaften Ausführungsform die Steuerschieber die Anker der Elektromagneten bilden.

Zur Sicherstellung, daß bei Stromausfall oder einer anderen Störung der Ansteuerung der Elektromagneten bei parallel arbeitenden konventionellen Dämpfungsventilen die Fahrsicherheit gewährleistet ist, sind die Steuerschieber über eine Feder so beaufschlagt, daß im stromlosen Zustand der Elektromagneten die Steuerschieber die Durchlässe zum Bypasskanal versperren.

Nach einem wesentlichen Merkmal weist das Dämpfungsventilsystem zwei Bohrungen auf, die in Zuström- und Abströmrichtung beaufschlagbar sind.

Ein weiteres Merkmal der Erfindung sieht weiterhin vor, daß die druckabhängigen Ventile des Dämpfungsventilsystems in unterschiedlichen Richtungen anströmbar sind und für jede Richtung jeweils mindestens ein federbelastetes Ventil aufweisen.

Das erfindungsgemäße, in einem Ventilgehäuse untergebrachte Dämpfungsventilsystem hat den Vorteil, daß es vier Dämpfungskraftkennlinien in der Zugstufe und im wesentlichen unabhängig davon vier weitere Kennlinien in der Druckstufe realisiert.

Vorteilhaft ist desweiteren, daß das Dämpfungsventilsystem direkt am Schwingungsdämpfer als sogenanntes Rucksackventil als auch an jeder anderen Stelle am Fahrzeug angeordnet werden kann.

Nachfolgend wird die Erfindung an einigen Ausführungsbeispielen näher beschrieben. Die zugehörigen Zeichnungen zeigen:
- Fig. 1: einen Einrohrschwingungsdämpfer, bei dem das Dämpfungsventilsystem den oberen und den unteren Arbeitsraum über einen Bypass verbindet,
- Fig. 2: einen Aufbau des Dämpfungsventilsystems, bei dem die druckabhängigen Ventile im Strömungsweg in Reihe zu den axial beweglichen Steuerschiebern angeordnet sind,
- Fig. 3 a - 3 d: die Funktionsweise des in Fig. 2 gezeigten Dämpfungsventilsystems in der Zugstufe,
- Fig. 4: einen Aufbau des Dämpfungsventilsystems, bei dem die druckabhängigen Ventile im Strömungsweg parallel zu den axial beweglichen Steuerschiebern angeordnet sind,
- Fig. 5 a - 5 d: die Funktionsweise des in Fig. 4 dargestellten Dämpfungsventilsystems in der Druckstufe
- Fig. 6: den Verlauf der durch das Dämpfungsventilsystem realisierbaren Kennlinien.
- Fig. 7: eine weitere Möglichkeit, die Dämpfungskraft eines Einrohrschwingungsdämpfers mit dem Dämpfungsventilsystem zu regeln,
- Fig. 8: eine weitere Variante des Dämpfungsventilsystems,
- Fig. 9: einen Einrohrschwingungsdämpfer mit Niveauregelung und
- Fig. 10: einen Zweirohrschwingungsdämpfer, bei dem das Dämpfungsventilsystem den oberen Arbeitsraum mit dem unteren Arbeitsraum verbindet.

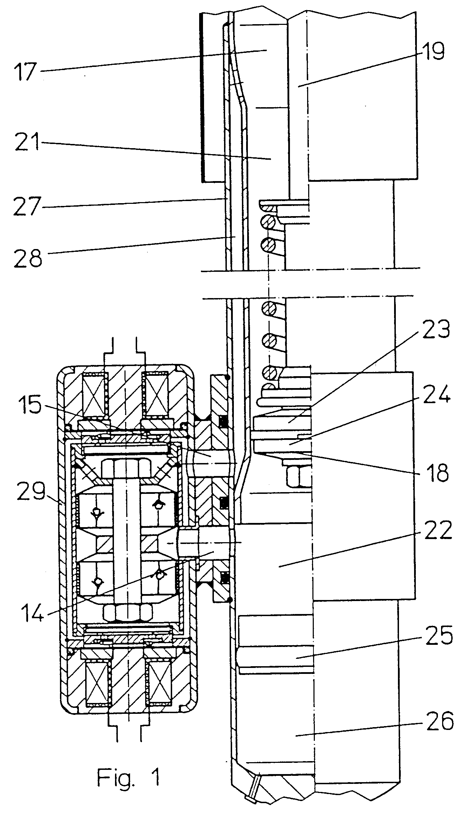

Der in Fig. 1 gezeigte regelbare Einrohrschwingungsdämpfer besteht im wesentlichen aus einem Dämpferzylinder 17 und einer in den Dämpferzylinder eintauchenden, in einem mit druckabhängigen Ventilen 23, 24 ausgestatteten Dämpfungskolben 18 endenden Kolbenstange 19, die durch die Führungs- und Dichtungseinheit 20 im Dämpferzylinder 17 geführt wird. Der Dämpfungskolben 18 unterteilt den Dämpfungsflüssigkeit enthaltenden Dämpferzylinder in einen oberen Arbeitsraum 21 und einen unteren Arbeitsraum 22, der durch den Trennkolben 25 vom Ausgleichsraum 26 getrennt ist. Der Trennkolben ist in der Wandung des Dämpferzylinders 17 schwimmend gelagert und ermöglicht so die Ölverdrängung der einfahrenden Kolbenstange 19. Im Bereich des Ein- und Ausfahrhubes des Dämpfungskolbens 18 wurde um den in diesem Bereich einen geringeren Durchmesser als in den Außenbereichen aufweisenden Dämpferzylinder 17 ein Rohr 27 zur Bildung eines Ringraums 28 abdichtend angeordnet. Das Dämpfungsventilsystem 29 ist direkt am Schwingungsdämpfer angeflanscht, wobei die Bohrung 15 über den Ringraum 28 mit dem oberen Arbeitsraum 21 und die Bohrung 14 des Dämpfungsventilsystems 29 mit dem unteren Arbeitsraum 22 verbunden ist.

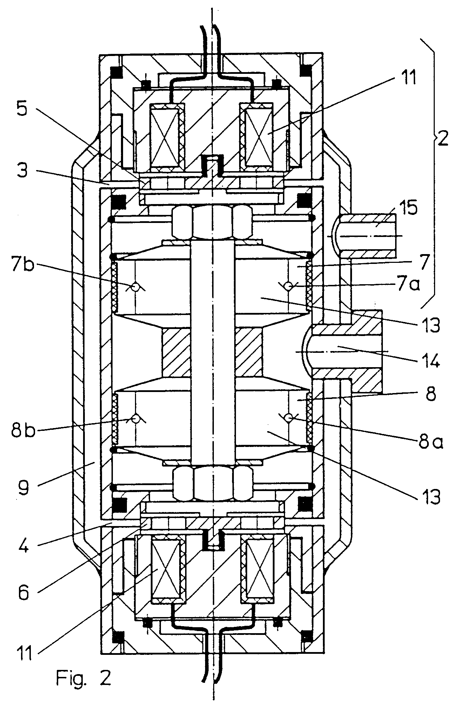

Fig. 2 zeigt den Aufbau des Dämpfungsventilsystems, bei dem die druckabhängigen Ventile 7, 8 im Strömungsweg der Dämpfungsflüssigkeit in Reihe zu den axial beweglichen, die Durchlässe 3, 4 steuerbaren Steuerschiebern 5, 6 angeordnet sind. Das Dämpfungsventilsystem besteht aus einem zylinderförmigen Ventilgehäuse 1, in dem sich axial nebeneinander zwei in den Durchflußrichtungen entgegengesetzt arbeitende Dämpfungsventile 2 befinden. Jedes der Dämpfungsventile besteht aus einem elektromagnetisch ansteuerbaren, mit einem Durchlaß 3, 4 zusammenarbeitenden, axial beweglichen Steuerschieber 5, 6 und mindestens einem zum Steuerschieber in Reihe angeordneten druckabhängigen Ventil 7, 8, wobei jedes der druckabhängigen Ventile 7, 8 aus zwei in entgegengesetzter Strömungsrichtung wirkenden Federscheibenventilen 7 a, 7 b, 8 a, 8 b besteht, die in Abhängigkeit des Dämpfungsflüssigkeitsdrucks mehr oder weniger öffnen. Durch den Einsatz der unterschiedlichsten Ventilkörper 13 und unterschiedlichster Federscheiben können die Dämpfungskraftkennlinien im großen Maß variiert werden. Die Steuerschieber 5, 6 werden jeweils über einen Elektromagneten 11, bestehend aus einer Spule und einem Anker, axial bewegt und sind so angeordnet, daß im stromlosen Zustand der Elektromagneten 11, die Durchlässe 3, 4 verschlossen sind und bei Ansteuerung geöffnet werden, dadurch wird erreicht, daß bei einer Störung, z. B. Stromausfall oder Kabelbruch, die Dämpfungskraft des Schwingungsdämpfers automatisch auf die härteste Kennlinie geschaltet wird. Um das Ventilgehäuse 1 ist ein Rohr 10 angeordnet, das den als Bypasskanal 9 dienenden Ringraum bildet, der über die Durchlässe 3, 4 mit dem Ventilinnenraum 16 verbunden ist.

Die regelbare Verbindung zwischen den Arbeitsräumen des Schwingungsdämpfers stellt das Dämpfungsventilsystem über die Bohrungen 14 und 15 her, wobei die Bohrung 15 den Bypasskanal 9 mit dem Ringraum 28 verbindet und die Bohrung 14 den unteren Arbeitsraum 22 des Schwingungsdämpfers mit dem Ventilinnenraum 16.

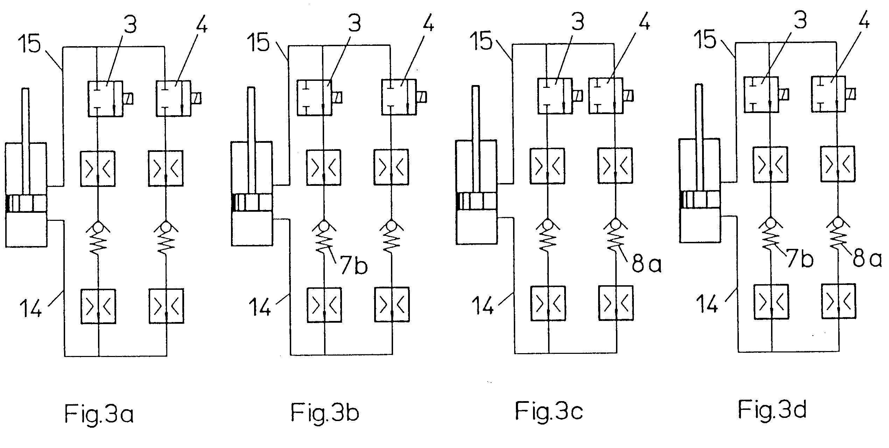

Die Figuren 3 a bis 3 b zeigen die Funktionsweise des in Fig. 2 dargestellten Dämpfungsventilsystems in der Zugstufe, wobei die Bohrung 15 als Zuströmbohrung und die Bohrung 14 als Abströmbohrung dienst. In der Druckstufe ist die Funktionsweise entgegengesetzt.

Sind, wie in Fig. 3 a dargestellt, beide Durchlässe 3, 4 durch die Ventilschieber 5, 6 geschlossen, ist das als Bypassventil wirkende Dämpfungsventilsystem vollständig geschlossen. Es wirken nur die druckabhängigen Dämpfungsventile 23, 24 des Dämpfungskolbens im Schwingungsdämpfer. In Fig. 3 b ist der Durchlaß 3 offen. Die Dämpfungsflüssigkeit kann also über die Bohrung 15 den Durchlaß 3 und das Federscheibenventil 7 b in die Bohrung 14 und damit in den unteren Arbeitsraum des Schwingungsdämpfers fließen. Gibt der Steuerschieber 6 den Durchlaß 4 frei und der Durchlaß 3 ist geschlossen, strömt die Dämpfungsflüssigkeit über den Bypasskanal 9, den Durchlaß 4 und das Federscheibenventil 8 a in die Bohrung 14 (Fig. 3 c). Die weicheste Dämpfungskennlinie wird erzeugt, wenn die Durchlässe 3 und 4 freigegeben werden. Die über die Bohrung 15 einströmende Dämpfungsflüssigkeit fließt über die Durchlässe 3 und 4 und die Federscheibenventile 7 b und 8 a in die Bohrung 14 (Fig. 3 d).

Beim Einsatz einer Niveauregelung mit einem externen Speicher kann das Dämpfungsventilsystem in der Verbindung zwischen einem der Arbeitsräume des Schwingungsdämpfers und dem externen Speicher zur Regelung der Dämpfungskraft für die Dämpfungsflüssigkeit eingesetzt werden.

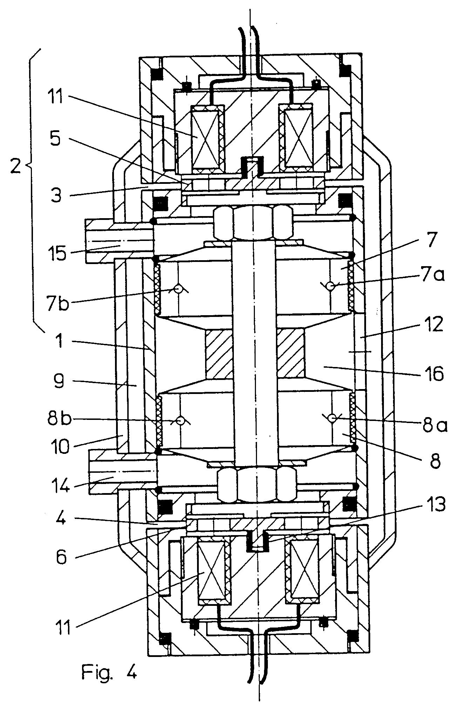

Eine andere Ausführung des Dämpfungsventilsystems ist in Fig. 4 gezeigt. Bei diesem Dämpfungsventilsystem sind die druckabhängigen Ventile 7, 8 im Strömungsweg parallel zu den axial beweglichen, die Durchlässe 3, 4 steuernden Steuerschiebern 5, 6 angeordnet. Die Bohrungen 14 und 15 weisen beide eine Verbindung zum Ventilinnenraum 16 auf.

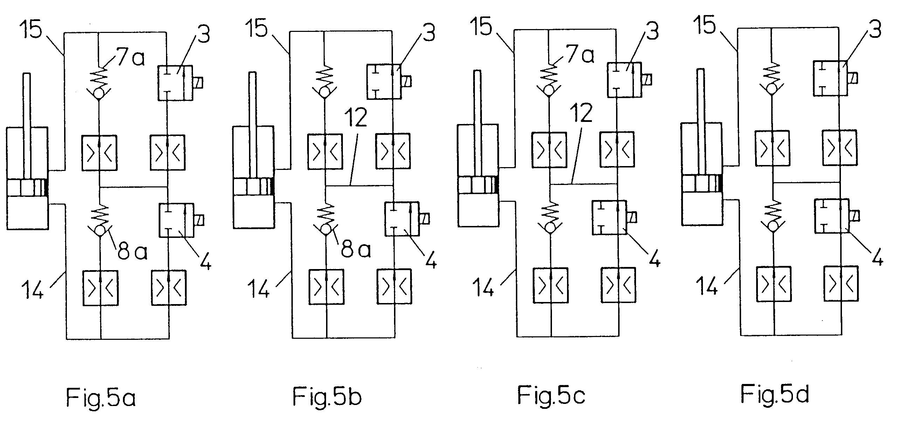

Die Fig. 5 a bis 5 b zeigen die Funktionsweise des Dämpfungsventilsystems in der Druckstufe, wobei die Bohrung 15 mit dem oberen Arbeitsraum des Schwingungsdämpfers und Bohrung 14 mit dem unteren Arbeitsraum verbunden ist. Im stromlosen Zustand der Elektromagneten 11 verschließen die Ventilschieber 5, 6 die Durchlässe 3, 4. Die durch die Bohrung 14 zuströmende Dämpfungsflüssigkeit fließt also nur über die in gleicher Richtung wirkenden Federscheibenventile 8 a, 7 a in die als Abströmbohrung wirkende Bohrung 15.

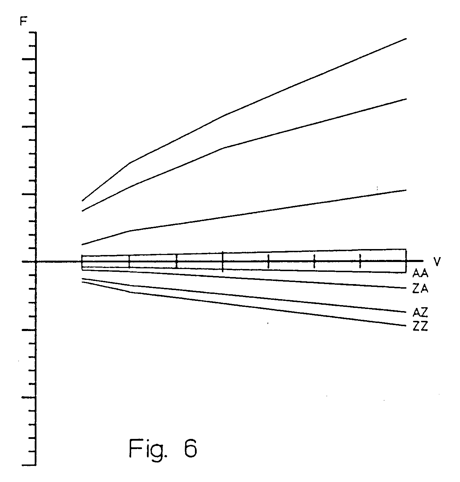

Der so realisierte Verlauf der Dämpfungskraft über der Kolbengeschwindigkeit stellt die härteste Kennung ZZ (Fig. 6) des Dämpfungsventilsystems dar.

Wird der Durchlaß 3 durch den Steuerschieber 5 geöffnet und der Durchlaß 4 bleibt weiterhin geschlossen (Fig. 5 b), fließt die durch die Bohrung 14 einströmende Dämpfungsflüssigkeit über das Federscheibenventil 8 a, den Bypasskanal 9 und den offenen Durchlaß 3 in die Bohrung 15. Es wird die in Fig. 5 dargestellte Kennlinie erzeugt.

Öffnet der Ventilschieber 6 den Durchlaß 4, der Durchlaß 3 bleibt jedoch verschlossen, fließt die durch die Bohrung 14 einströmende Dämpfungsflüssigkeit über den Durchlaß 4 in Bypasskanal 9 und von hieraus über den Durchlaß 12, den Ventilinnenraum und das Federscheibenventil 7 a in die Bohrung 15 und realisiert dadurch die Kennlinie ZA. Die weicheste Kennlinie AA wird erzeugt, wenn beide Elektromagneten angesteuert werden und die Steuerschieber 5, 6 die Durchlässe 3, 4 freigeben.

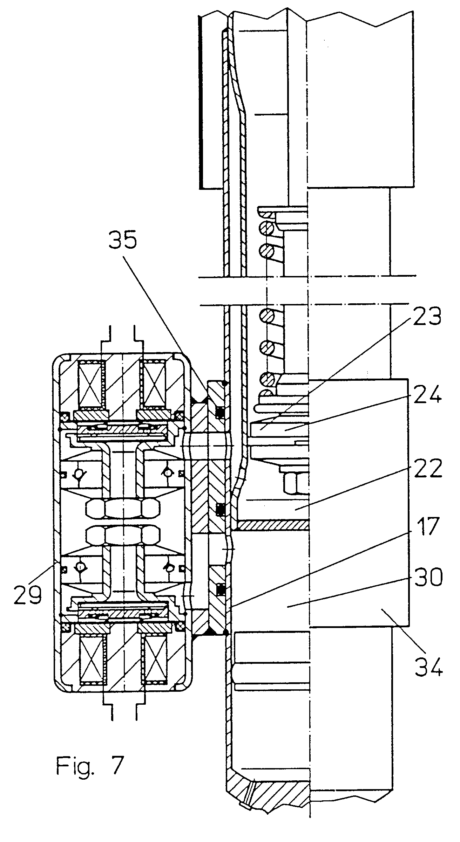

Eine andere Möglichkeit, die Dämpfungskraft eines Einrohrschwingungsdämpfers zu regeln, ist in Fig. 7 gezeigt, indem das Dämpfungsventilsystem 29 zwischen dem unteren Arbeitsraum 22 des Schwingungsdämpfers und einem Ölausgleichsraum 30 angeordnet ist. Bei dieser Anordnung des Dämpfungsventilsystems 29 addiert sich die durch das Ventil erzeugte Dämpfungskraftkennung zu der durch die Dämpfungsventile 23 oder 24 erzeugten Kennungen.

Das Dämpfungsventilsystem 29 ist mittels eines Flansches 34 auf dem Dämpferzylinder 17 aufgesetzt und mit Dichtungen 35 nach außen und gegenüber der Wandung des Dämpferzylinders 17 abgedichtet.

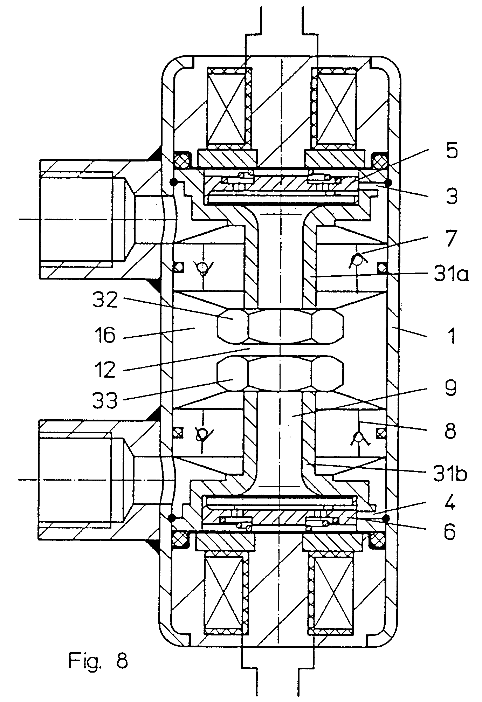

Eine weitere Variante des Dämpfungsventilsystems, bei dem die druckabhängigen Ventile 7, 8 im Strömungsweg parallel zu den axial beweglichen Steuerschiebern 5, 6 angeordnet sind, zeigt Fig. 8. Der Bypasskanal 9 des Dämpfungsventilsystems 29 ist hier durch ein im Ventilgehäuse 1 zwischen den von den Steuerschiebern 5, 6 verstellbaren Durchlässen 3, 4 angeordnetes Rohr 31 gebildet, das zwischen den druckabhängigen Ventilen 7, 8 geteilt ist und damit einen Durchlaß 12 zum Ventilinnenraum 16 aufweist. Die Rohrteile 31 a und 31 b tragen gleichzeitig die Ventile 7 und 8, die über Schraubenmuttern 32, 33 befestigt sind.

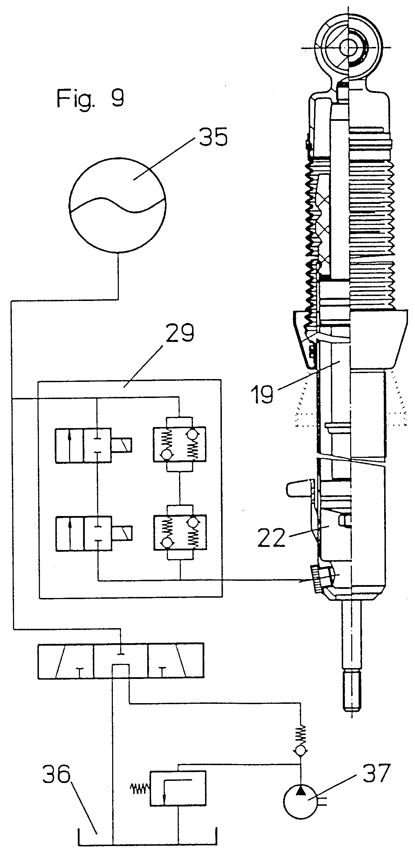

Auch in einer Niveauregelung eines Einrohrschwingungsdämpfers läßt sich das Dämpfungsventilsystem problemlos anwenden, wie in Fig. 9 dargestellt. Im Fall einer Anhebung des Fahrzeuges wird Dämpfungsflüssigkeit in den unteren Arbeitsraum 22 des Schwingungsdämpfers gepumpt, wobei die entsprechende Kennung über das Dämpfungsventilsystem 29 eingestellt wird. Beim Einfedern des Fahrzeuges wird Dämpfungsflüssigkeit aus dem unteren Arbeitsraum 22 über das eine eingestellte Dämpfungskraftkennlinie erzeugende Dämpfungsventilsystem 29 in den Hochdruckspeicher 35 gedrückt, um das Volumen der einfahrenden Kolbenstange 19 zu kompensieren. Zur Erzielung einer entsprechenden Niveauregelung enthält das System weiterhin einen Vorratstank 36, eine Pumpe 37 sowie die notwendigen Steuerungseinrichtungen.

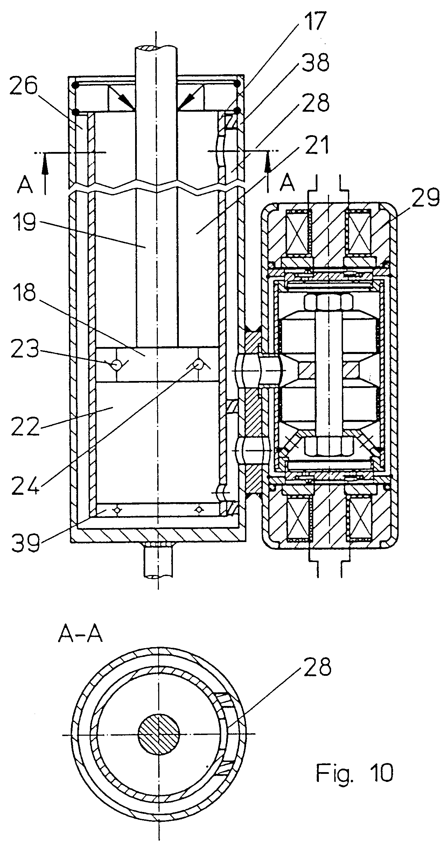

Der in Fig. 10 abgebildete Zweirohrschwingungsdämpfer besteht im wesentlichen aus einem Dämpferzylinder 17, in welchem ein mit der Kolbenstange 19 verbundener, Dämpfungsventile 23, 24 tragender Dämpfungskolben 18 axial verschiebbar angeordnet ist. Um den Dämpferzylinder ist zur Bildung des Ausgleichsraums 26 ein Außenzylinder 38 konzentrisch angeordnet. Der Dämpferzylinder 17 wird durch den Dämpfungskolben 18 in zwei Arbeitsräume 21 und 22 unterteilt, letzterer ist über das Bodenventil 39 mit dem Ausgleichsraum 26 verbunden, um das durch die einfahrende Kolbenstange 19 verdrängte Volumen zu kompensieren.

Vom oberen Arbeitsraum 21 ist über den Kanal 28 und das als Bypassventil zu den druckabhängigen Dämpfungsventilen 23, 24 geschaltete Dämpfungsventilsystem 29 eine Verbindung zum unteren Arbeitsraum 22 realisiert. In dieser Strömungsverbindung steuert das Dämpfungsventilsystem einen variablen Dämpfungsflüssigkeitsumlauf.

Es besteht jedoch auch die Möglichkeit, mit Hilfe des Dämpfungsventilsystems eine regelbare Strömungsverbindung zwischen dem oberen Arbeitsraum 21 und dem Ausgleichsraum 6 oder dem unteren Arbeitsraum 22 und den Ausgleichsraum 26 zu schaffen.

Zur Anpassung der Dämpfungseigenschaften des Schwingungsdämpfers an den jeweiligen Fahrzeugzustand oder die jeweiligen Straßengegebenheiten wird das Dämpfungsventilsystem entsprechend angesteuert, wobei entsprechende Sensoren die Ermittlung der verschiedenen Parameter, wie Beladung, Fahrgeschwindigkeit, Aufbaubeschleunigung, vornehmen.

### Bezugszeichenliste

- 1: Ventilgehäuse
- 2: Dämpfungsventile
- 3: Durchlaß
- 4: Durchlaß
- 5: Steuerschieber
- 6: Steuerschieber
- 7: druckabhängiges Ventil
- 7a: Federscheibenventil
- 7b: Federscheibenventil
- 8: druckabhängiges Ventil
- 8a: Federscheibenventil
- 8b: Federscheibenventil
- 9: Bypaßkanal
- 10: Rohr
- 11: Elektromagnet
- 12: Durchlaß
- 13: Ventilkörper
- 14: Bohrung
- 15: Bohrung
- 16: Ventilinnenraum
- 17: Dämpferzylinder
- 18: Dämpfungskolben
- 19: Kolbenstange
- 20: Führungs- und Dichtungseinheit
- 21: Arbeitsraum
- 22: Arbeitsraum
- 23: druckabhängiges Dämpfungsventil (Kolben)
- 24: druckabhängiges Dämpfungsventil (Kolben)
- 25: Trennkolben
- 26: Ausgleichsraum
- 27: Rohr
- 28: Kanal
- 29: Dämpfungsventilsystem
- 30: Ölausgleichsraum
- 31: Rohr
- 32: Schraubenmutter
- 33: Schraubenmutter
- 34: Flansch
- 35: Hochdruckspeicher
- 36: Vorratstank
- 37: Pumpe
- 38: Außenzylinder
- 39: Bodenventil

## Patentansprüche

1. Regelbarer Schwingungsdämpfer für Kraftfahrzeuge bestehend aus einem mit Dämpfungsflüssigkeit gefüllten Dämpferzylinder (17), in dem ein mit einer Kolbenstange (19) verbundener, mit druckabhängigen Ventilen (23,24) versehener Dämpfungskolben (18) gleitet, der den Dämpferzylinder (17) in zwei Arbeitsräume (21,22) unterteilt, und der mit einem regelbaren Dämpfungsventilsystem (29) zur Einstellung der Dämpfungskraft des Schwingungsdämpfers versehen ist, wobei das Dämpfungsventilsystem (29) zwei Dämpfungsventile (2) aufweist, wobei jedes der Dämpfungsventile (2) aus einem elektromagnetisch ansteuerbaren mit mindestens einem Durchlaß (3,4) zusammen arbeitenden, axial beweglichen Steuerschieber (5,6) und mindestens einem druckabhängigen Ventil (7,8) besteht, wobei das Dämpfungsventilsystem (29) den Querschnitt eines Bypasskanals (9) steuert, der die Arbeitsräume (21,22) und/oder Ausgleichsräume (26,35) des Schwingungsdämpfers miteinander verbindet,
**dadurch gekennzeichnet,**
daß die Dämpfungsventile in einem zylinderförmigen Ventilgehäuse (1) axial gegeneinander angeordnet sind, und daß das druckabhängige Ventil (7,8) mit dem Steuerschieber strömungstechnisch parallel oder in Reihe geschaltet ist.

2. Regelbarer Schwingungsdämpfer nach Anspruch 1, dadurch gekennzeichnet, daß das Dämpfungsventilsystem mindestens einen Arbeitsraum (21 oder 22) des Schwingungsdämpfers mit einem als externer Speicher (35) ausgebildeten Ausgleichsraum für unter erhöhten Druck stehende Dämpfungsflüssigkeit regelbar verbindet.

3. Regelbarer Schwingungsdämpfer nach einem der Ansprüche 1 oder 2, dadurch gekennzeichnet, daß der Bypaßkanal (9) durch ein um das Ventilgehäuse (1) angeordnetes Rohr (10) gebildet wird und der Bypaßkanal (9) Verbindungen zu den von den Steuerschiebern (5, 6) verstellbaren Durchlässen (3, 4) aufweist.

4. Regelbarer Schwingungsdämpfer nach Anspruch 3, dadurch gekennzeichnet, daß der Bypaßkanal (9) zwischen den druckabhängigen Ventilen (7, 8) mindestens einen Durchlaß (12) zum Ventilraum (16) aufweist.

5. Regelbarer Schwingungsdämpfer nach einem der Ansprüche 1 oder 2, dadurch gekennzeichnet, daß der durch das Dämpfungsventilsystem steuerbare Bypaßkanal (9) durch ein den Dampferzylinder (17) oder den Außenzylinder umgebendes Rohr gebildet ist.

6. Regelbarer Schwingungsdämpfer nach einem der Ansprüche 1 oder 2, dadurch gekennzeichnet, daß der durch das Dämpfungsventilsystem (29) steuerbare Bypaßkanal (9) durch ein im Ventilgehäuse (1) zwischen den von den Steuerschiebern (5, 6) verstellbaren Durchlässen (3, 4) angeordnetes Rohr (31) gebildet ist, das zwischen am druckabhängigen Ventilen (7, 8) mindestens einen Durchlaß (12) zum Ventilraum (16) aufweist.

7. Regelbarer Schwingungsdämpfer nach einem oder mehreren der Ansprüche 1 bis 6, dadurch gekennzeichnet, daß die axial beweglichen Steuerschieber (5, 6) jeweils über einen Elektromagneten (11) beaufschlagt werden.

8. Regelbarer Schwingungsdämpfer nach Anspruch 7, dadurch gekennzeichnet, daß die Steuerschieber (5, 6) die Anker der Elektromagneten (11) bilden.

9. Regelbarer Schwingungsdämpfer nach einem der Ansprüche 7 oder 8, dadurch gekennzeichnet, daß die Steuerschieber (5, 6) über eine Feder (13) so beaufschlagt werden, daß im stromlosen Zustand der Elektromagneten (11) die Steuerschieber (5, 6) die Durchlässe (3, 4) versperren.

10. Regelbarer Schwingungsdämpfer nach einem oder mehreren der Ansprüche 1 bis 9, dadurch gekennzeichnet, daß mindestens zwei Bohrungen (14, 15) vorgesehen sind, die in Zuström- und Abströmrichtung beaufschlagbar sind.

11. Regelbarer Schwingungsdämpfer nach einem der Ansprüche 1 bis 10, dadurch gekennzeichnet, daß die druckabhängigen Ventile (7, 8) in unterschiedlichen Richtungen anströmbar sind und für jede Richtung jeweils mindestens ein federbelastetes Ventil (7a, 7b, 8a, 8b) aufweisen.

12. Schwingungsdämpfer nach einem der Ansprüche 1 bis 11, dadurch gekennzeichnet, daß das Dämpfungsventilsystem (29) mit einem Flansch (34) auf den Dämpferzylinder (17) oder den Außenzylinder (38) abdichtend aufgesetzt ist.

13. Schwingungsdämpfer nach einem der Ansprüche 1 bis 11, dadurch gekennzeichnet, daß das Dämpfungsventilsystem (29) durch Löten oder Schweißen am Dämpfungszylinder (17) oder am Außenzylinder (38) befestigt ist.

## Claims

1. Controllable shock absorber for motor vehicles consisting of a damping cylinder (17) filled with damping fluid, in which slides a damping piston (18) provided with pressure-dependent valves (23, 24) and connected to a piston rod (19), the said damping piston divides the damping cylinder (17) into two working chambers (21, 22) and is provided with a controllable damping valve system (29) to adjust the damping force of the shock absorber, wherein the damping valve system (29) comprises two damping valves (2), wherein each of the damping valves (2) consists of at least one pressure-dependent valve (7, 8) and of an electromagnetically controllable control disc (5, 6) which is axially movable and cooperates with at least one through passage (3, 4), wherein the damping valve system (29) controls the cross-section of a bypass duct (9) which connects the working chambers (21, 22) and/or compensating chambers (26, 35) of the shock absorber to each other, characterised in that the damping valves are disposed axially opposite each other in a cylindrical valve housing (1) and that the pressure-dependent valve (7, 8) is connected to the control disc in parallel or in series in flow technology terms.

2. Controllable shock absorber according to claim 1, characterised in that the damping valve system connects, in a controllable manner, at least one working chamber (21 or 22) of the shock absorber to a compensation chamber formed as an external reservoir (35) for damping fluid under increased pressure.

3. Controllable shock absorber according to one of claims 1 or 2, characterised in that the bypass duct (9) is formed by a pipe (10) disposed around the valve housing (1) and the bypass duct (9) comprises connections to the through passages (3, 4) which can be controlled by the control discs (5, 6).

4. Controllable shock absorber according to claim 3, characterised in that between the pressure-dependent valves (7, 8) the bypass duct (9) comprises at least one through passage (12) to the valve chamber (16).

5. Controllable shock absorber according to one of claims 1 or 2, characterised in that the bypass duct (9), which is controllable by the damping valve system, is formed by a pipe surrounding the damping cylinder (17) or the outer cylinder.

6. Controllable shock absorber according to one of claims 1 or 2, characterised in that the bypass duct (9), which is controllable by the damping valve system (29), is formed by a pipe (31) disposed in the valve housing (1) between the through passages (3, 4) which can be controlled by the control discs (5, 6), the said pipe comprising, between pressure-dependent valves (7, 8), at least one through passage (12) to the valve chamber (16).

7. Controllable shock absorber according to one or more of claims 1 to 6, characterised in that the axially movable control discs (5, 6) are each acted upon by an electromagnet (11).

8. Controllable shock absorber according to claim 7, characterised in that the control discs (5, 6) form the armatures of the electromagnets (11).

9. Controllable shock absorber according to one of claims 7 or 8, characterised in that the control discs (5, 6) are acted upon by a spring (13) in such a way that in the unenergised state of the electromagnets (11) the control discs (5, 6) block the through passages (3, 4).

10. Controllable shock absorber according to one or more of claims 1 to 9, characterised in that at least two bores (14, 15) are provided which can be acted upon in the inflow and outflow directions.

11. Controllable shock absorber according to one of claims 1 to 10, characterised in that flow can take place against the pressure-dependent valves (7, 8) in different directions and for each direction they each comprise at least one spring loaded valve (7a, 7b, 8a, 8b).

12. Shock absorber according to one of claims 1 to 11, characterised in that the damping valve system (29) is sealingly positioned with a flange (34) on the damping cylinder (17) or the outer cylinder ( ).

13. Shock absorber according to one of claims 1 to 11, characterised in that the damping valve system (29) is fixed by soldering or welding to the damping cylinder (17) or to the outer cylinder (38).

## Revendications

1. Amortisseur de vibrations réglable pour véhicules, constitué d'un cylindre d'amortisseur (17) rempli d'un liquide d'amortissement, dans lequel coulisse un piston d'amortissement (18) relié à une tige de piston (19), doté de soupapes (23, 24) asservies à la pression, qui divise le cylindre d'amortisseur (17) en deux chambres de travail (21, 22), et qui est doté d'un système réglable de soupapes d'amortissement (29) en vue de l'établissement de la force d'amortissement de l'amortisseur de vibrations, dans lequel le système de soupapes d'amortissement (29) présente deux soupapes d'amortissement (2), chacune des soupapes d'amortissement (2) étant constituée d'un tiroir de distribution (5, 6) mobile axialement, qui peut être commandé électromagnétiquement et qui coopère avec au moins un passage (3, 4), et d'au moins une soupape (7, 8) asservie à la pression, dans lequel le système de soupapes d'amortissement (29) commande la section transversale d'un canal de dérivation (9) qui relie les unes aux autres les chambres de travail (21, 22) et/ou les chambres d'équilibrage (26, 35) de l'amortisseur de vibrations,
caractérisé en ce que
les soupapes d'amortissement sont disposées l'une à côté de l'autre dans le sens axial dans un boîtier de soupapes (1) en forme de cylindre, et en ce que la soupape (7, 8) asservie à la pression est raccordée au tiroir de distribution de manière à permettre un écoulement en parallèle ou en serie.

2. Amortisseur réglable de vibrations selon la revendication 1, caractérisé en ce que le système de soupapes d'amortissement relie de manière réglable au moins une chambre de travail (21 ou 22) de l'amortisseur de vibrations à une chambre d'équilibrage configurée comme réservoir extérieur (35) pour le liquide d'amortissement placé sous pression plus élevée.

3. Amortisseur réglable de vibrations selon l'une des revendications 1 ou 2, caractérisé en ce que le canal de dérivation (9) est formé par un tube (10) disposé autour du boîtier de soupapes (1), et le canal de dérivation (9) présente des liaisons vers les passages (3, 4) ajustables par les tiroirs de distribution (5, 6).

4. Amortisseur réglable de vibrations selon la revendication 3, caractérisé en ce que le canal de dérivation (9) présente entre les soupapes (7, 8) asservies à la pression au moins un passage (12) vers la chambre des soupapes (16).

5. Amortisseur réglable de vibrations selon l'une des revendications 1 ou 2, caractérisé en ce que le canal de dérivation (9) qui peut être commandé par le système de soupapes d'amortissement est formé par un tube entourant le cylindre d'amortisseur (17) ou le cylindre extérieur.

6. Amortisseur réglable de vibrations selon l'une des revendications 1 ou 2, caractérisé en ce que le canal de dérivation (9) qui peut être commandé par le système de soupapes d'amortissement (29) est formé par un tube (31) disposé dans le boîtier de soupapes (1) entre les passages (3, 4) qui peuvent être ajustés par les tiroirs de distribution (5, 6), qui présente entre les soupapes (7, 8) asservies à la pression au moins un passage (12) vers la chambre des soupapes (16).

7. Amortisseur réglable de vibrations selon l'une ou plusieurs des revendications 1 à 6, caractérisé en ce que les tiroirs de distribution (5, 6) mobiles axialement sont commandés chacun par l'intermédiaire d'un électroaimant (11).

8. Amortisseur réglable de vibrations selon la revendication 7, caractérisé en ce que les tiroirs de distribution (5, 6) forment les induits des électroaimants (11).

9. Amortisseur réglable de vibrations selon l'une des revendications 7 ou 8, caractérisé en ce que les tiroirs de distribution (5, 6) sont placés sous l'action d'un ressort (13) de telle sorte que, lorsque les électroaimants (11) ne sont pas alimentés en courant, les tiroirs de distribution (5, 6) bloquent les passages (3, 4).

10. Amortisseur réglable de vibrations selon l'une ou plusieurs des revendications 1 à 9, caractérisé en ce qu'au moins deux alésages (14, 15) sont prévus, qui peuvent être commandés dans la direction d'écoulement d'entrée et dans la direction d'écoulement de sortie.

11. Amortisseur réglable de vibrations selon l'une des revendications 1 à 10, caractérisé en ce que les soupapes (7, 8) asservies à la pression peuvent être traversées dans des directions différentes, et présentent pour chaque direction chaque fois au moins une soupape (7a, 7b, 8a, 8b) soumises à l'action d'un ressort.

12. Amortisseur de vibrations selon l'une des revendications 1 à 11, caractérisé en ce que le système de soupapes d'amortissement (29) est placé de manière étanche sur le cylindre d'amortisseur (17) ou sur le cylindre extérieur (38), de manière étanche.

13. Amortisseur de vibrations selon l'une des revendications 1 à 11, caractérisé en ce que le système de soupapes d'amortissement (29) est fixé par brasage ou soudage sur le cylindre d'amortissement (17) ou sur le cylindre extérieur (38).
